# EUROPÄISCHE PATENTANMELDUNG

(11) **EP 3 372 885 A1**
(43) Veröffentlichungstag der Anmeldung: **12.09.2018**
(21) Anmeldenummer: 18159380.7
(22) Anmeldetag: 01.03.2018
(51) Int. Cl.: F16L 41/06, F16J 15/02, F16L 41/12

(54) **DICHTUNGSELEMENT**

(30) Priorität: 10.03.2017 DE 202017101369 U
(71) Anmelder: REHAU AG + Co, 95111 Rehau (DE)
(72) Erfinder: Kirsch, Stefan, 91560 Heilsbronn (DE); Meyer, Michael, 85072 Eichstätt (DE)

(57) **Zusammenfassung**

Die vorliegende Erfindung betrifft ein Dichtungselement (1) zur Anordnung an einem Hauptrohr (13) zwischen der Außenoberfläche des Hauptrohres (13) und einer das Hauptrohr (13) umfassenden Schelle (14) mit einer Anbohreinrichtung für die fluiddichte Herstellung der Verbindung des Hauptrohres (13) mit einem Nebenrohr oder einer Armatur, das sich dadurch auszeichnet, dass dieses einen Anlageflächenabschnitt (2) umfasst, der etwa in Form eines Zylindermantelflächenabschnitts gekrümmt ist, und sich bis zu ersten Begrenzungskanten (10) und zweiten Begrenzungskanten (11) erstreckt, und der zwei einander gegenüberliegende Seiten (3), eine erste Seite (3.1) und eine zweite Seite (3.2), aufweist, wobei wenigstens ein Dichtvorsprung (5) ausgebildet ist, der sich über die Oberfläche (4) des Anlageflächenabschnitts (2) hinaus auf wenigstens einer Seite (3) des Anlageflächenabschnitts (2) erhebt, sowie ein etwa zentral von der ersten Seite (3.1) des Anlageflächenschnitts (2) aus etwa senkrecht wegstehender Stutzen (6), der einteilig mit dem Anlageflächenabschnitt (2) ausgebildet ist, und der an seinem vom Anlageflächenabschnitt (2) entfernten Ende (8) eine Dichtungswulst (9) aufweist.

## Beschreibung

Weiterhin betrifft die Erfindung eine Rohrabzweigeinrichtung und ein Rohrsystem mit einer solchen Rohrabzweigeinrichtung.

Beim fluiddichten Verbinden von Einrichtungen und Elementen für die Aufnahme, Speicherung und Leitung von Fluiden werden sehr häufig Dichtungen eingesetzt. Solche Dichtungen werden beispielsweise benötigt, wenn ein Nebenrohr oder eine Armatur mit einem Hauptrohr fluiddicht verbunden werden soll.

Derartige Dichtungen werden aus Gründen der einfachen Herstellbarkeit oft als Flachdichtungen ausgeführt. Bei der Anordnung an der Außenoberfläche eines Rohres werden diese auf Grund der notwendigen Krümmung oftmals verspannt und dichten dann nur noch ungenügend oder nicht mehr.

Diese Dichtungen sind neben diesem Nachteil teilweise schwierig zu installieren und erfüllen die technischen Anforderungen, die an solche Dichtungen gestellt werden, meist nur begrenzt.

Hier setzt die Erfindung ein, die sich die Aufgabe gestellt hat, die vorgenannten Nachteile zu überwinden und ein Dichtungselement zur Verfügung zu stellen, das eine hohe Dichtheit bereitstellt, einfach zu installieren ist und den technischen Ansprüchen, insbesondere was die Temperaturbeständigkeit betrifft, entspricht.

Es hat sich im Rahmen der vorliegenden Erfindung ergeben, dass ein Dichtungselement diese Aufgaben löst, wenn vorgesehen ist, dass dieses zur Anordnung an einem Hauptrohr zwischen der Außenoberfläche des Hauptrohres und einer das Hauptrohr umfassenden Schelle mit einer Anbohreinrichtung für die fluiddichte Herstellung der Verbindung des Hauptrohres mit einem Nebenrohr oder einer Armatur ausgebildet ist, und sich dadurch auszeichnet, dass das Dichtungselement einen Anlageflächenabschnitt umfasst, der etwa in Form eines Zylindermantelflächenabschnitts gekrümmt ist, und sich bis zu ersten Begrenzungskanten und bis zu zweiten Begrenzungskanten erstreckt, und der zwei einander gegenüberliegende Seiten, eine erste Seite und eine zweite Seite, aufweist, wobei wenigstens ein Dichtvorsprung ausgebildet ist, der sich über die Oberfläche des Anlageflächenabschnitts hinaus auf wenigstens einer Seite des Anlageflächenabschnitts erhebt, sowie ein etwa zentral von der ersten Seite des Anlageflächenabschnitts aus etwa senkrecht wegstehender Stutzen, der einteilig mit dem Anlageflächenabschnitt ausgebildet ist, und der an seinem vom Anlageflächenabschnitt entfernten Ende eine Dichtungswulst aufweist.

Das Dichtungselement der vorliegenden Erfindung weist durch die vorstehend genannte Ausbildung eine hohe Dichtigkeit auf, ist einfach installierbar und erfüllt die gestellten technischen Anforderungen.

Das Dichtungselement wird bei der vorliegenden Erfindung an einem Hauptrohr zwischen der Außenoberfläche des Hauptrohres und einer das Hauptrohr umfassenden Schelle angeordnet. Die Schelle ist dabei derart ausgebildet, dass sie eine Anbohreinrichtung für die fluiddichte Herstellung der Verbindung des Hauptrohres mit einem Nebenrohr oder einer Armatur aufweist oder mit einer solchen Anbohreinrichtung zumindest zeitweise - bis zur Herstellung einer Öffnung im Hauptrohr - verbindbar ist.

Auf diese Weise kann ein fluiddichter Anschluss eines Nebenrohres oder einer Armatur, wie beispielsweise einer Entlüftungseinrichtung zur Entfernung von Luft oder Gasen aus dem Hauptrohr, ohne Betriebsunterbrechung, d. h. ohne dass der Fluss und / oder der Druck des Fluids im Hauptrohr unterbrochen bzw. reduziert werden muss, an einem Hauptrohr bewerkstelligt werden.

Insbesondere bei Systemen zur Leitung und Verteilung eines Fluids bei Fernwärmeanwendungen, d. h. bei Anwendungen, bei denen Wärme in einer Erzeugungseinrichtung bereitsteht und an einen, meist aber an viele Verbraucher abzugeben ist, kann die Erfindung sehr vorteilhaft genutzt werden.

Hierbei kommt es besonders darauf an, dass das erfindungsgemäße Dichtungselement hinsichtlich seiner Dichtfunktion hohen Ansprüchen genügt, temperaturfest ist und weiteren technischen Anforderungen, wie beispielsweise langlebig ist, entspricht.

Die Formgebung des Dichtungselements, dessen Anlageflächenabschnitt etwa in Form eines Zylindermantelflächenabschnitts gekrümmt ist, ermöglicht es in einfacher Weise, das Dichtungselement in eine Schelle einzulegen, die das Hauptrohr umfasst und somit zumindest abschnittsweise auch etwa in Form eines Zylindermantelflächenabschnitts ausgebildet ist. Hierdurch kommt es beim Klemmen der Schelle um das Hauptrohr kaum zu Spannungen bei der Installation des Dichtungselements, was entsprechend Vorteile für die Dichtigkeit mit sich bringt.

Durch das Vorsehen des Stutzens bei dem erfindungsgemäßen Dichtungselement, der etwa zentral von der ersten Seite des Anlageflächenabschnitts aus etwa senkrecht wegsteht und der einteilig mit dem Anlageflächenabschnitt ausgebildet ist, und der an seinem vom Anlageflächenabschnitt entfernten Ende eine Dichtungswulst aufweist, kann das Dichtungselement in einfacher Weise in der Schelle angeordnet und darin befestigt werden, indem der Stutzen in einen hierfür vorgesehenen von der Schelle wegstehenden Rohrabschnitt eingeschoben wird. Dadurch kommt kein Fluid mit der Wandung der Schelle in Kontakt.

Weiterhin stellt die Dichtungswulst an dem vom Anlageflächenabschnitt entfernten Ende des Stutzens gleich einen "O-Ring" zur Verfügung für die fluiddichte Verbindung der Schelle mit dem Nebenrohr oder der Armatur.

Auf diese Weise kann auf den bisher im Stand der Technik benötigten O-Ring zwischen der Schelle und dem Verschlussorgan der Anbohreinrichtung verzichtet werden, was technische Vorteile mit sich bringt.

Die vorliegende Erfindung stellt somit das Dichtungselement mit den beschriebenen Merkmalen und daraus resultierenden Vorteilen bereit.

Es kann sich bei der vorliegenden Erfindung als besonders günstig erweisen, wenn vorgesehen ist, dass der wenigstens eine Dichtvorsprung entlang des gesamten Umfangs des Stutzens mit einem vorgegebenen Abstand A zu diesem ausgebildet ist.

Durch das Ausbilden des Dichtvorsprungs entlang des gesamten Umfangs des Stutzens mit einem vorgegebenen Abstand A kann das Dichtungselement mithilfe der das Hauptrohr umfassenden Schelle gegen die Außenoberfläche des Hauptrohres gedrückt werden, und bewirkt so eine vollständige Dichtigkeit zwischen dem Hauptrohr und dem Dichtungselement. Durch die Anordnung des Dichtvorsprungs entlang des gesamten Umfangs des Stutzens, wobei zwischen dem Dichtvorsprung und dem Stutzen ein vorgegebener Abstand A eingehalten ist, kann eine gleichmäßige Anpressung des Dichtungselements auf der Außenoberfläche des Hauptrohres mithilfe der das Hauptrohr umfassenden Schelle gewährleistet werden, wodurch es hinsichtlich seiner Dichtfunktion den gestellten hohen Ansprüchen genügt.

Im Rahmen der vorliegenden Erfindung kann es sich als sehr vorteilhaft erweisen, wenn vorgesehen ist, dass das Dichtungselement spiegelsymmetrisch zu einer Ebene, die durch das Zentrum des Stutzens geht und parallel zu einer ersten Begrenzungskante und zu einer zweiten Begrenzungskante verläuft, ausgebildet ist.

In einer alternativen Ausführung des Dichtungselements kann vorgesehen sein, dass dieses spiegelsymmetrisch zu zwei Ebenen, die durch das Zentrum des Stutzens gehen und von denen eine parallel zu einer ersten Begrenzungskante und die andere parallel zu einer zweiten Begrenzungskante verlaufen, ausgebildet ist. Insbesondere kann vorgesehen sein, dass sich die beiden vorgenannten Ebenen unter einem Winkel von 90° (Winkelgrad) oder einem Winkel von etwa 90° (Winkelgrad) schneiden.

Durch die vorstehend bezeichneten Maßnahmen kann in einfacher Weise ein Dichtungselement bereitgestellt werden, welches symmetrisch zu einer Ebene bzw. symmetrisch zu zwei Ebenen ausgebildet ist

Dadurch wird sowohl die Herstellung des Werkzeugs für die Fertigung des Dichtungselements, wie auch die Herstellung des Dichtungselements selbst, und ebenso die Installation des Dichtungselements bei dessen Anwendung vereinfacht.

So ist insbesondere bei der Installation die zu wählende Orientierung des Dichtungselements beim Einsatz in die Schelle vereinfacht, was den Installationsprozess sicherer und damit weniger fehleranfällig macht.

Bei der vorliegenden Erfindung kann es sich als besonders günstig erweisen, wenn vorgesehen ist, dass zwei, drei oder vier Dichtvorsprünge ausgebildet sind, die sich über die Oberfläche des Anlageflächenabschnitts hinaus auf der ersten Seite und auf der zweiten Seite des Anlageflächenabschnitts erheben und entlang des gesamten Umfangs des Stutzens mit vorgegebenen Abständen zu diesem ausgebildet sind.

Auf diese Weise kann bei dem erfindungsgemäßen Dichtungselement eine ganz besonders hohe Dichtheit bei der Installation erreicht werden, da die das Hauptrohr umfassende Schelle das Dichtungselement mit der Mehrzahl von Dichtvorsprüngen diese auf die Außenoberfläche des Hauptrohres anpresst.

Mit großem Vorteil kann bei der vorliegenden Erfindung vorgesehen sein, dass das Dichtungselement aus einem Polymermaterial besteht oder ein Polymermaterial enthält, wobei das Polymermaterial ein Silikonkautschuk oder ein Ethylen-Propylen-Dien-Kautschuk (EPDM) ist.

Die genannten Polymermaterialien zeichnen sich dadurch aus, dass sie langlebig und inert sind, ein dauerhaft hohes Rückstellvermögen und einen guten Druckverformungsrest aufweisen, einfach handhabbar und leicht formbar sind, gut verfügbar und kostengünstig bereitstellbar sind.

Die genannten Polymermaterialien können leicht eingefärbt werden, sind aber auch in durchsichtiger, durchscheinender bzw. opaker Materialqualität verfügbar.

Das Dichtungselement kann je nach technischer Notwendigkeit noch verbessert werden, indem Abschnitte des Dichtungselements beispielsweise mit Polymermaterial- oder Metalleinlegern, wie beispielsweise Drähten, Folien, Platten, Blechen oder Gittern, verstärkt werden, und so Abschnitte des Dichtungselements versteifen oder festigen.

Als besonders vorteilhaft kann sich bei der vorliegenden Erfindung erweisen, wenn vorgesehen ist, dass das Dichtungselement aus Silikonkautschuk in einem Vakuumgießverfahren oder einem Spritzgussverfahren hergestellt ist.

Die Herstellung des erfindungsgemäßen Dichtungselements aus Silikonkautschuk in einem Vakuumgießverfahren oder einem Spritzgussverfahren ist einfach, in hohem Maße reproduzierbar und kostengünstig.

Alternativ ist es auch möglich, dass das Dichtungselement unter Verwendung eines generativen Fertigungsverfahrens, insbesondere einstückig, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für ein Dichtungselement.

Hierbei umfasst das Verfahren insbesondere auch die Eingabe von Daten, die ein Dichtungselement darstellen, in eine Datenverarbeitungsmaschine und die Nutzung der Daten, um ein Dichtungselementen als dreidimensionales Modell darzustellen, wobei das dreidimensionale Modell geeignet ist zur Nutzung bei der Herstellung eines Dichtungselements. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf ein Dichtungselement abgegeben wird und die reflektierte Energie empfangen wird, und wobei ein virtuelles dreidimensionales Modell eines Dichtungselements unter Verwendung einer computerunterstützten Design-Software erzeugt wird.

In vorteilhafter Weise kann das Dichtungselement auch in einem Fertigungsverfahren hergestellt sein, wobei das Fertigungsverfahren ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfasst. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Mit großem Vorteil können an dem erfindungsgemäßen Dichtungselement Markierungen angebracht bzw. aufgebracht sein, die es ermöglichen durch einen entsprechenden Zuschnitt des Dichtungselements entlang dieser Markierungen auch eine oder mehrere verschiedene in den Abmessungen kleinere Dichtungselemente herzustellen, die für Hauptrohre und Schellen kleinerer Abmessungen geeignet sind.

Die Erfindung löst weiterhin die Aufgabe, eine Rohrabzweigeinrichtung bereitzustellen, gemäß den Merkmalen des Anspruchs 7.

Es wurde im Rahmen der vorliegenden Erfindung erkannt, dass eine Rohrabzweigeinrichtung mit einem Dichtungselement gemäß vorstehender Beschreibung ganz besonders dafür geeignet ist, ein Hauptrohr mit einem Nebenrohr oder einer Armatur fluiddicht zu verbinden.

Eine solche Rohrabzweigeinrichtung, insbesondere eine Rohrabzweigeinrichtung, bei der eine Schelle um das Hauptrohr herum gelegt ist und ein Dichtungselement anpresst, und die zumindest an der Schelle eine Anbohreinrichtung aufweist oder mit einer solchen zumindest zeitweise verbunden ist, mit der eine Öffnung im Hauptrohr erzeugbar ist, wobei zu diesem Zweck das Fluid aus dem Hauptrohr nicht entfernt werden muss bzw. der Druck des Fluids im Hauptrohr nicht reduziert werden muss, ist besonders vorteilhaft dazu geeignet, eine fluiddichte Verbindung zwischen dem Hauptrohr und ein an das Hauptrohr anzuschließendes Nebenrohr oder eine Armatur herzustellen.

Die letzte Aufgabe der Erfindung, ein Rohrsystem bereitzustellen, erfährt ihre Lösung in Anspruch 8.

Im Rahmen der vorliegenden Erfindung wurde erkannt, dass ein Rohrsystem mit wenigstens einem Hauptrohr und wenigstens einem Nebenrohr oder einer Armatur und einer Rohrabzweigeinrichtung gemäß vorstehender Beschreibung die vorstehend genannten wesentlichen technischen Vorteile mit sich bringt, was eine sehr hohe Dichtigkeit, leichte Installierbarkeit und das Erfüllen von technischen Anforderungen angeht.

Hierbei wurde im Rahmen der vorliegenden Erfindung als überaus vorteilhaft erkannt, wenn das Rohrsystem wenigstens eine Rohrabzweigvorrichtung, wie vorstehend beschrieben, umfasst.

Ein solches Rohrsystem kann neben der Rohrabzweigvorrichtung noch weitere Rohre und Einrichtungen umfassen, um beispielsweise das Fluid hinsichtlich des Flusses und des Volumens oder seiner Temperatur und seines Druckes zu messen oder dergleichen.

Ein derartiges Rohrsystem kann sehr vorteilhaft betrieben werden, weil durch die erfindungsgemäße Rohrabzweigvorrichtung zum einen sichergestellt ist, dass Fluid zwischen dem Hauptrohr und dem angeschlossenen Nebenrohr oder der angeschlossenen Armatur ausgetauscht werden kann, und zum anderen verhindert ist, dass in unerwünschter Weise Fluid aus em Rohrsystem nach außen bzw. von außen Fluid in das Rohrsystem gelangt.

Anwendung findet das Rohrsystem der vorliegenden Erfindung überall dort, wo zwei Fluidbauwerke miteinander in Fluidverbindung stehen und wo sicherzustellen ist, dass eine fluiddichte Verbindung zwischen ihnen besteht.

Neben der geschilderten Anwendung beim Transport eines Fluids als Wärmeträger in Nah- und Fernwärmenetzen gibt es weitere Anwendungsfelder in der Industrie, in der Getränke- und Lebensmittelindustrie, in der Landwirtschaft und in weiteren Bereichen.

Weitere wichtige Merkmale und Vorteile der Erfindung geben sich aus den Unteransprüchen, aus den Figuren sowie aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Fig. dargestellt und wird in der nachfolgenden Beschreibung näher erläutert.

Hierzu zeigt:
- Fig. 1:: eine seitliche perspektivische erste Ansicht des Dichtungselements;
- Fig. 2:: eine seitliche perspektivische zweite Ansicht des Dichtungselements;
- Fig. 3a:: eine Aufsicht auf das Dichtungselement;
- Fig. 3b:: den Schnitt A-A des Dichtungselements aus Fig. 3a;
- Fig. 3c:: den Schnitt B-B des Dichtungselements aus Fig. 3a;
- Fig. 4:: eine seitliche perspektivische Ansicht des in einer Schelle aufgenommenen Dichtungselements;
- Fig. 5a:: eine Aufsicht auf das in einer Schelle aufgenommene Dichtungselement aus Fig. 4;
- Fig. 5b:: den Schnitt A-A des Dichtungselements aus Fig. 5a;
- Fig. 5c:: den Schnitt B-B des Dichtungselements aus Fig. 5a.

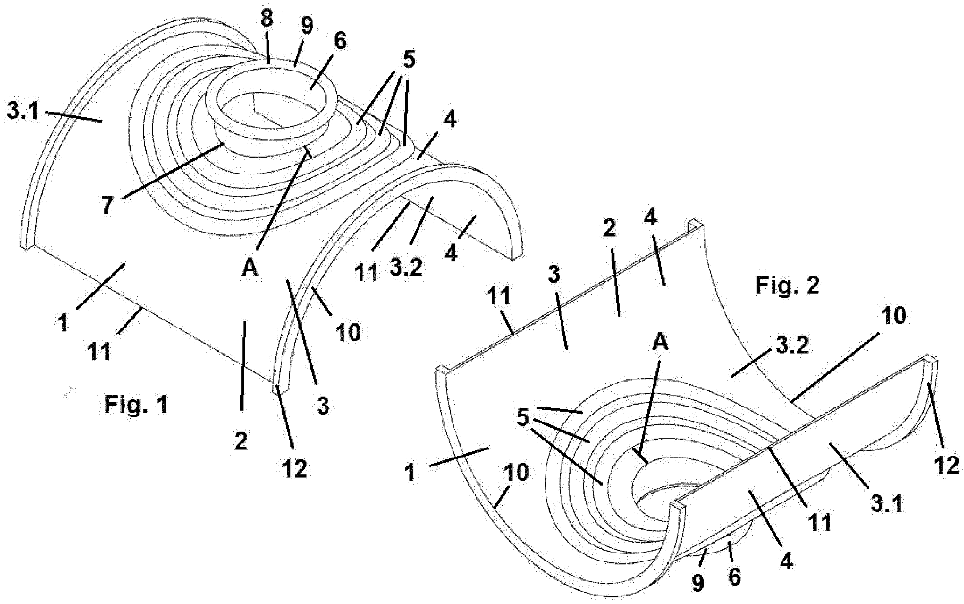

In der Fig. 1 ist eine seitliche perspektivische Ansicht des Dichtungselements 1 der vorliegenden Erfindung gezeigt.

Das Dichtungselement 1 umfasst einen Anlageflächenabschnitt 2, der etwa in Form eines Zylindermantelflächenabschnitts gekrümmt ist. Der Anlagenflächenabschnitt 2 des Dichtungselements 1 wird von zwei ersten Begrenzungskanten 10 und zwei zweiten Begrenzungskanten 11 begrenzt. Die beiden ersten Begrenzungskanten 10 sind etwa parallel zueinander ausgebildet. Ebenso sind die beiden zweiten Begrenzungskanten 11 etwa parallel zueinander ausgebildet.

Der Anlageflächenabschnitt 2 des Dichtungselements 1 weist zwei Seiten 3 auf, die einander gegenüberliegen. Hierbei ist eine erste Seite 3.1 und eine zweite Seite 3.2 ausgebildet, wobei die zweite Seite 3.2 der ersten Seite 3.1 gegenüberliegt.

Etwa zentrisch erstreckt sich von der ersten Seite 3.1 des Anlageflächenabschnitts 2 des Dichtungselements 1 ein Stutzen 6 senkrecht weg, der einteilig mit dem Anlageflächenabschnitt 2 des Dichtungselements 1 ausgebildet ist.

Der Stutzen 6 weist einen Fuß 7 auf, mit dem er auf dem Anlageflächenabschnitt 2 aufsitzt, und ein Ende 8, das dem Anlageflächenabschnitt 2 gegenüberliegt.

An seinem vom Anlageflächenabschnitt 2 entfernten Ende 8 weist der Stutzen 6 eine Dichtungswulst 9 auf.

Auf der ersten Seite 3.1 des Anlageflächenabschnitts 2 des Dichtungselements 1 sind drei Dichtvorsprünge 5 ausgebildet, die sich über die Oberfläche 4 der ersten Seite 3.1 des Anlageflächenabschnitts 2 des Dichtelements 1 erheben. Die Dichtvorsprünge 5 sind entlang des gesamten Umfangs des Stutzens 6 ausgebildet. Die Ausbildung der Dichtvorsprünge 5 entlang des gesamten Umfangs des Stutzens 6 ist mit vorgegebenen Abständen erfolgt, wobei der dem Stutzen 6 unmittelbar benachbarte Dichtvorsprung 5 einen Abstand A zu diesem aufweist. Die weiteren Dichtvorsprünge 5 sind entlang des gesamten Umfangs des Stutzens mit vorgegebenen Abständen zu diesem ausgebildet. Der Stutzen 6 weist etwa die Form einer Zylindermantelfläche auf.

In der Fig. 2 ist eine seitliche perspektivische zweite Ansicht des Dichtungselements 1 der vorliegenden Erfindung gezeigt.

Die Bezugszeichen in Fig. 2 entsprechen denen aus Fig. 1.

Auch an der zweiten Seite 3.2 des Anlageflächenabschnitts 2 des Dichtungselements 1 sind Dichtvorsprünge 5 ausgebildet.

In der vorliegenden Ausführung des Dichtungselements 1 sind drei Dichtvorsprünge 5 an der zweiten Seite 3.2 des Anlageflächenabschnitts 2 des Dichtungselements 1 ausgebildet, die entlang des gesamten Umfangs des Stutzens 6 vorgesehen sind.

An der ersten Begrenzungskante 10 des Anlageflächenabschnitts 2 des Dichtungselements 1 ist eine Erhebung 12 ausgebildet, die entlang der gesamten Länge der ersten Begrenzungskante 10 verläuft. Eine solche Erhebung 12 ist an beiden ersten Begrenzungskanten 10 des Anlageflächenabschnitts 2 des Dichtungselements 1 ausgebildet, wobei die beiden Erhebungen 12 gleichgestaltet sind.

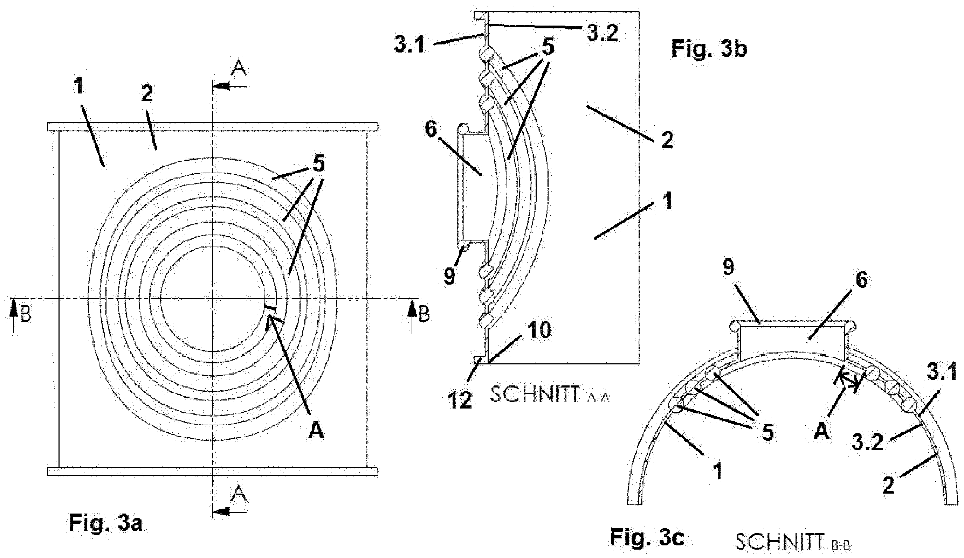

In der Fig. 3a ist eine Aufsicht auf das Dichtungselement 1 der vorliegenden Erfindung dargestellt.

Die Bezugszeichen in Fig. 3a entsprechenden denen aus den vorangehenden Figuren.

In der Projektion auf die Abbildungsebene weist der Anlageflächenabschnitt 2 des Dichtungselements 1 eine etwa rechteckige Form auf.

Am Anlageflächenabschnitt 2 des Dichtungselements 1 sind drei Dichtvorsprünge 5 ausgebildet, die entlang des gesamten Umfangs des Stutzens 6 mit vorgegebenen Abständen zu diesem vorgesehen sind. Beispielhaft ist der Abstand A zwischen dem Stutzen 6 und dem unmittelbar benachbarten Dichtvorsprung 5 dargestellt.

In der Fig. 3b ist der Schnitt A-A des Dichtungselements 1 aus Fig. 3a gezeigt.

Die Bezugszeichen in Fig. 3b entsprechenden denen aus den vorangehenden Figuren.

Am Anlageflächenabschnitt 2 des Dichtungselements 1 sind drei Dichtvorsprünge 5 ausgebildet, die sich über die Oberfläche 4 des Anlageflächenabschnitts 2 hinaus auf der ersten Seite 3.1 und auf der zweiten Seite 3.2 des Anlageflächenabschnitts 2 erheben.

Der Stutzen 6 ragt etwa senkrecht vom Zentrum des Anlageflächenabschnitts 2 des Dichtungselements 1 an der ersten Seite 3.1 hervor. Am vom Anlageflächenabschnitt 2 entfernten Ende des Stutzens 6 ist eine Dichtungswulst 9 ausgebildet.

An den ersten Begrenzungskanten 10 des Anlageflächenabschnitts 2 des Dichtungselements 1 sind Erhebungen 12 ausgebildet, die von der ersten Seite 3.1 des Anlageflächenabschnitts 2 wegstehen.

In der Fig. 3c ist der Schnitt B-B des Dichtungselements 1 aus Fig. 3a gezeigt.

Die Bezugszeichen in Fig. 3c entsprechenden denen aus den vorangehenden Figuren.

Die an der ersten Seite 3.1 und der zweiten Seite 3.2 des Anlageflächenabschnitts 2 ausgebildeten drei Dichtvorsprünge 5 erheben sich über die Oberfläche 4 des Anlageflächenabschnitts 2 hinaus und sind entlang des gesamten Umfangs des Stutzens 6 mit vorgegebenen Abständen zu diesem ausgebildet.

Beispielhaft ist ein Abstand A zwischen dem Stutzen 6 und dem diesem benachbarten Dichtvorsprung 5 abgebildet.

In besonders vorteilhafter Weise sind die Dichtvorsprünge 5 auf der ersten Seite 3.1 und der zweiten Seite 3.2 des Anlageflächenabschnitts 2 so ausgebildet, dass diese einander gegenüberliegen. Dadurch kann ein besonders intensives Anpressen des Dichtungselements 1 mit Hilfe der Schelle 14 auf der Oberfläche des Hauptrohres 13 erfolgen, was hinsichtlich einer zu schaffenden fluiddichten Verbindung wünschenswert ist.

Die in den Fig. 3b und 3c gezeigten Schnittebenen A-A und B-B bilden Spiegelebenen bei dem erfindungsgemäßen Dichtungselement 1.

Das Dichtungselement 1 ist sowohl entlang der Schnittebene A-A, wie auch entlang der Schnittebene B-B, wie auch entlang der Schnittebene A-A und der Schnittebene B-B spiegelsymmetrisch ausgebildet.

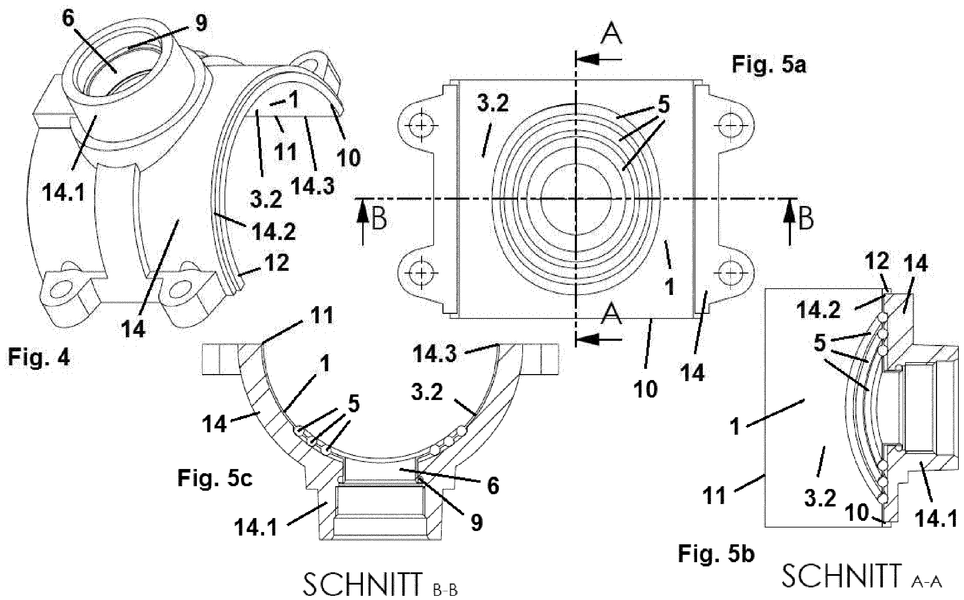

In der Fig. 4 ist eine seitliche perspektivische Ansicht des in einer Schelle 14 aufgenommenen Dichtungselements 1 der vorliegenden Erfindung gezeigt.

Die Bezugszeichen in Fig. 4 entsprechenden denen aus den vorangehenden Figuren.

Das Dichtungselement 1 der vorliegenden Erfindung ist in der Schelle 14 aufgenommen. Die Innenoberfläche der Schelle 14 weist etwa die Form eines Zylindermantelflächenabschnitts auf, von dem aus etwa zentrisch ein abzweigendes Rohrstück 14.1 etwa senkrecht wegsteht.

Das Dichtungselement 1 ist dabei derart in der Schelle 14 angeordnet, dass die beiden ersten Begrenzungskanten 10 des Dichtungselements 1 über den beiden ersten Schellenrändern 14.2 der Schelle 14 hinausragen, so dass die Erhebungen 12 an den beiden ersten Begrenzungskanten 10 die beiden ersten Schellenränder 14.2 der Schelle 14 übergreifen. Auf diese Weise ist es bei der Installation der Schelle 14 am hier nicht gezeigten Hauptrohr 13 sehr einfach, den ordnungsgemäßen Einbauzustand des erfindungsgemäßen Dichtungselements 1 zu erkennen, soweit die Erhebungen 12 die Schellenränder 14.2 der Schelle 14 entlang ihrer gesamten Länge ohne Falten oder dergleichen übergreifen, wenn die Schelle 14 mit dem Dichtungselement 1 auf das Hauptrohr 13 geklemmt wird. Hierzu kann ein aus dem Stand der Technik bekanntes Klemmelement, wie beispielsweise ein um das Hauptrohr 13 abschnittsweise herumlegbarer Streifen oder Bogen oder eine Gewindestange benutzt werden, womit die Klemmung erfolgen kann.

Das Dichtungselement 1 ist weiterhin derart in der Schelle 14 angeordnet, dass die zweiten Begrenzungskanten 11 mit den zweiten Schellenrändern 14.3 der Schelle 14 etwa bündig abschließen ohne dabei überzustehen.

Der Stutzen 6 am Anlageflächenabschnitt 2 des Dichtungselements 1 ragt ein Stück weit in das Innere des Rohrstücks 14.1 an der Schelle 14.

In der Fig. 5a ist eine Aufsicht auf das in der Schelle 14 aufgenommene Dichtungselement aus Fig. 4 dargestellt.

Die Bezugszeichen in Fig. 5a entsprechen denen aus den vorangehenden Figuren.

Die Größe der Schelle 14 und die Größe des Dichtungselements 1 sind so zueinander abgestimmt, dass das Dichtungselement 1 komplett in der Schelle 14 aufgenommen werden kann, wobei die ersten Begrenzungskanten 10 des Anlageflächenabschnitts 2 des Dichtungselements derart zum Rand der Schelle 14 positioniert sind, dass die Erhebungen 12 an den ersten Begrenzungskanten 10 des Anlageflächenabschnitts 2 des Dichtungselements 1 die Begrenzungskanten der Schelle 14 übergreifen.

In Fig. 5b ist der Schnitt A-A des Dichtungselements 1 aus Fig. 5a gezeigt.

Die Bezugszeichen in Fig. 5b entsprechen denen aus den vorangehenden Figuren.

Durch die Anordnung des Dichtungselements 1 in der Schelle 14 kommen die Dichtvorsprünge 5 mit der inneren Oberfläche der Schelle 14 in Berührung.

In Fig. 5c ist der Schnitt B-B des Dichtungselements 1 aus Fig. 5a gezeigt.

Die Bezugszeichen in Fig. 5c entsprechen denen aus den vorangehenden Figuren.

Das Dichtungselement 1 der vorliegenden Erfindung und die Schelle 14 weisen im Wesentlichen die gleiche Krümmung auf und sind beide etwa in Form eines Zylindermantelflächenabschnitts ausgebildet.

Beim Anordnen des Dichtungselements 1 in der Schelle 14 ist diese in etwa konturgenau an der Innenoberfläche der Schelle 14 anlegbar.

Der Stutzen 6 am Anlageflächenabschnitt 2 des Dichtungselements 1 ist dabei in das Innere des von der Schelle 14 wegstehenden Rohrstücks 14.1 eingeschoben.

Die drei Dichtvorsprünge 5 auf der ersten Seite 3.1 des Anlageflächenabschnitts 2 des Dichtungselements 1 stehen mit der inneren Oberfläche der Schelle 14 in Berührung.

Beim Anordnen eines hier nicht gezeigten Hauptrohres 13 an der Schelle 14, wobei die erfindungsgemäße Dichtung 1 dann zwischen der Außenoberfläche des Hauptrohres 13 und der Schelle 14 vorgesehen ist, erfüllt beim Spannen der Schelle 14 um das Hauptrohr 13 das Dichtungselement 1 seine Dichtungsfunktion zwischen der Schelle 14 und dem Hauptrohr 13.

### Bezugszeichenliste

- 1: Dichtungselement
- 2: Anlageflächenabschnitt
- 3: Seite
- 3.1: erste Seite
- 3.2: zweite Seite
- 4: Oberfläche
- 5: Dichtvorsprung
- 6: Stutzen
- 7: Fuß
- 8: Ende
- 9: Dichtungswulst
- 10: erste Begrenzungskante
- 11: zweite Begrenzungskante
- 12: Erhebung
- 13: Hauptrohr
- 14: Schelle
- 14.1: abzweigendes Rohrstück
- 14.2: erster Schellenrand
- 14.3: zweiter Schellenrand
- 15: Rohrabzweigeinrichtung
- 16: Rohrsystem
- A: Abstand

## Patentansprüche

1. Dichtungselement (1) zur Anordnung an einem Hauptrohr (13) zwischen der Außenoberfläche des Hauptrohres (13) und einer das Hauptrohr (13) umfassenden Schelle (14) mit einer Anbohreinrichtung für die fluiddichte Herstellung der Verbindung des Hauptrohres (13) mit einem Nebenrohr oder einer Armatur, **dadurch gekennzeichnet, dass** dieses einen Anlage-flächenabschnitt (2) umfasst, der etwa in Form eines Zylindermantelflächenabschnitts gekrümmt ist, und sich bis zu ersten Begrenzungskanten (10) und zweiten Begrenzungskanten (11) erstreckt, und der zwei einander gegenüberliegende Seiten (3), eine erste Seite (3.1) und eine zweite Seite (3.2), aufweist, wobei wenigstens ein Dichtvorsprung (5) ausgebildet ist, der sich über die Oberfläche (4) des Anlageflächenabschnitts (2) hinaus auf wenigstens einer Seite (3) des Anlageflächenabschnitts (2) erhebt, sowie ein etwa zentral von der ersten Seite (3.1) des Anlageflächenschnitts (2) aus etwa senkrecht wegstehender Stutzen (6), der einteilig mit dem Anlageflächenabschnitt (2) ausgebildet ist, und der an seinem vom Anlage-flächenabschnitt (2) entfernten Ende (8) eine Dichtungswulst (9) aufweist.

2. Dichtungselement (1) nach Anspruch 1, **dadurch gekennzeichnet, dass** der wenigstens eine Dichtvorsprung (5) entlang des gesamten Umfangs des Stutzens (6) mit einem vorgegebenen Abstand A zu diesem ausgebildet ist.

3. Dichtungselement (1) nach Anspruch 1 oder 2, **dadurch gekennzeichnet, dass** dieses spie-gelsymmetrisch zu einer Ebene, die durch das Zentrum des Stutzens (6) geht und parallel zu einer ersten Begrenzungskante (10) oder zu einer zweiten Begrenzungskante (11) verläuft, oder dass dieses spiegelsymmetrisch zu zwei Ebenen, die durch das Zentrum des Stutzens (6) gehen und von denen eine parallel zu einer ersten Begrenzungskante (10) und die andere parallel zu einer zweiten Begrenzungskante (11) verlaufen, ausgebildet ist.

4. Dichtungselement (1) nach einem der vorangehenden Ansprüche, **dadurch gekennzeichnet, dass** zwei, drei oder vier Dichtvorsprünge (5) ausgebildet sind, die sich über die Oberfläche (4) des Anlageflächenabschnitts (2) hinaus auf der ersten Seite (3.1) und auf der zweiten Seite (3.2) des Anlageflächenabschnitts (2) erheben und entlang des gesamten Umfangs des Stutzens (6) mit vorgegebenen Abständen zu diesem ausgebildet sind.

5. Dichtungselement (1) nach einem der vorangehenden Ansprüche, **dadurch gekennzeichnet, dass** diese aus einem Polymermaterial besteht oder ein Polymermaterial enthält, wobei das Polymermaterial ein Silikonkautschuk oder ein Ethylen-Propylen-Dien-Kautschuk (EPDM) ist.

6. Dichtungselement (1) nach Anspruch 5, **dadurch gekennzeichnet, dass** dieses aus Silikon-kautschuk in einem Vakuumgießverfahren oder einem Spritzgussverfahren hergestellt ist.

7. Rohrabzweigeinrichtung (15) mit einem Dichtungselement (1) nach einem der Ansprüche 1 bis 6.

8. Rohrsystem (16) mit wenigstens einem Hauptrohr (13) und wenigstens einem Nebenrohr oder einer Armatur und einer Rohrabzweigeinrichtung (15) nach Anspruch 7.
